# EUROPÄISCHE PATENTSCHRIFT

(11) **EP 0 966 374 B1**
(45) Veröffentlichungstag und Bekanntmachung des Hinweises auf die Patenterteilung: **26.02.2003**
(21) Anmeldenummer: 98959716.6
(22) Anmeldetag: 08.10.1998
(51) Int. Cl.: B60S 1/40

(54) **LAGERTEIL ZUM ANLENKEN EINES WISCHERBLATTS**
SUPPORT FOR THE JOINT HINGE OF A WIPER BLADE
SUPPORT D'ARTICULATION D'UN BALAI D'ESSUIE-GLACE

(30) Priorität: 16.10.1997 DE 19745846
(43) Veröffentlichungstag der Anmeldung: 29.12.1999
(73) Patentinhaber: ROBERT BOSCH GMBH, 70442 Stuttgart (DE)
(72) Erfinder: WESTERMANN, Klaus-Jürgen, D-76307 Karlsbad (DE); POLLARIS, Eric, B-3670 Meeuwen-Gruitrook (BE); STRAUSS, Andreas, D-76863 Herxheim (DE)
(86) Internationale Anmeldenummer: DE9802968
(87) Internationale Veröffentlichungsnummer: WO99020501

(56) Entgegenhaltungen:
- EP-A- 0 234 525
- EP-A- 0 655 373
- DD-A- 259 823
- DE-A- 3 311 303
- US-A- 5 611 103

## Beschreibung

### Stand der Technik

Die Erfindung geht aus von einem Lagerteil zum Anlenken eines Wischerblatts nach dem Oberbegriff des Anspruchs 1.

Bekannte Scheibenwischer besitzen einen Wischerarm, der aus einem Befestigungsteil und einem daran angelenkten Gelenkteil mit einer Wischstange aufgebaut ist. Ferner haben sie ein Wischerblatt, das aus einem Tragbügelsystem mit einem übergeordneten Mittelbügel und gelenkig verbundenen, untergeordneten Zwischenbügeln sowie Krallenbügeln und einer Wischleiste aufgebaut ist. Das Wischerblatt ist am Wischerarm angelenkt, indem ein hakenförmiges Ende der Wischstange ein Lagerteil hält, das zwischen zwei Seitenwangen des Mittelbügels angeordnet ist und mit einer über einen Umfangsbereich offenen Nabe einen Gelenkbolzen des Mittelbügels umfaßt. Das so gebildete Gelenk führt das Wischerblatt während der Schwenkbewegung über die Scheibe, wobei das Gelenk und das Tragbügelsystem es ermöglichen, daß sich die Wischleiste einer Wölbung der Scheibe anpassen kann.

Während der Wischerarm in der Regel fahrzeugspezifisch gestaltet ist und sich praktisch während der Lebensdauer nicht abnutzt, verschleißt das Wischerblatt insbesondere an den Gelenken und an der Wischleiste, so daß es während der Lebensdauer des Fahrzeugs häufiger gewechselt werden muß. Hierbei wird in der Regel nicht nur die Wischleiste, sondern das gesamte Wischerblatt ausgetauscht, das im Handel erhältlich ist.

Um die Anzahl der Wischerblattypen gering zu halten, werden den Wischerblättern Lagerteile aus Kunststoff beigepackt, die unterschiedliche Aufnahmevorrichtungen für die Wischstange aufweisen und es daher ermöglichen, das gleiche Wischerblatt mit Wischstangen mit unterschiedlichen Materialstärken und Breiten sowie Biegeradien und Rastelementen zu verwenden. Der Benutzer wählt aus den vorhandenen Lagerteilen das für sein Fahrzeug geeignete aus und wirft die übrigen fort. Die überflüssigen Lagerteile vergrößern die Verpackung der Wischerblätter und führen zu einem vergrößerten Müllanfall. Ferner steigt das Transport- und Lagervolumen.

Aus der EP 0 234 525 B1 ist ein gattungsgemäßes Lagerteil bekannt, das zur offenen Nabe in Längsrichtung versetzt einen Quersteg aufweist, der in montiertem Zustand des Lagerteils am hakenförmigen Ende der Wischstange als Fixierung in Längsrichtung dient. Dazu hat der Quersteg von der Drehachse der Nabe einen Abstand, der dem äußeren Biegeradius des hakenförmigen Endes der Wischstange entspricht. Die Wischstange benötigt daher zur Längssicherung des Lagerteils kein Rastloch. Das Lagerteil ist somit für Wischstangen mit und ohne Rastloch geeignet.

Ferner ist aus der EP 0 655 373 A1 ein ähnliches Lagerteil bekannt, das zwei in Längsrichtung zur Nabe versetzt angeordnete Querstege aufweist, die als Längssicherung für ein hakenförmiges Ende einer Wischstange dienen, und zwar der Quersteg, der der Drehachse am nächsten liegt, für ein hakenförmiges Ende mit einem kleineren Biegeradius und der andere Quersteg für ein hakenförmiges Ende mit einem größeren Biegeradius. Das hakenförmige Ende mit einem größeren Biegeradius liegt mit seiner gebogenen Innenfläche an einer entsprechend geformten Anlagefläche des ersten Quersteges an. Somit ist dieses Lagerteil für Wischstangen geeignet, deren hakenförmige Enden zwei unterschiedliche Biegeradien aufweisen. Um das Lagerteil gegenüber der Wischstange gegen Verdrehen zu sichern, besitzt es einen weiteren Quersteg und eine zur Nabe hin versetzt angeordnete Rastnase. Die Wischstange wird bei der Montage zwischen dem Quersteg und der Rastnase eingerastet.

### Vorteile der Erfindung

Nach der Erfindung nach Anspruch 1 hat das Lagerteil einen länglichen Grundkörper mit zwei diametral zur Nabe liegenden Armen, der in einem Haltebügel koaxial zur Nabe drehbar gehalten ist. Dadurch kann der Grundkörper zum Haltebügel geschwenkt werden und ein hakenförmiges Ende einer Wischstange über einen Arm des Grundkörpers gezogen und dann zurück in die Ausgangslage geschwenkt werden. Da die Arme unterschiedlich gestaltet sind, ist das Lagerteil mindestens für zwei unterschiedliche, hakenförmige Enden von Wischstangen geeignet.
Um hakenförmige Enden mit unterschiedlich großen Biegeradien verwenden zu können, haben die Arme des Grundkörpers jeweils mindestens zwei in Längsrichtung verlaufende parallele Anlageflächen, an denen die Schenkel des hakenförmigen Endes anliegen und deren Abstände zueinander unterschiedlich groß sind. Dabei kann ein Arm mehrere Anlageflächen aufweisen, die zum einen durch die Umfangskontur des Arms und zum anderen durch Aussparungen in dem Arm des Grundkörpers gebildet sind. Somit ist das Lagerteil für Wischstangen mit mehr als zwei unterschiedlichen hakenförmigen Enden geeignet.

Die hakenförmigen Enden sind im Lagerteil seitlich zu den Anlageflächen geführt, z.B. durch seitliche Führungen an den Seitenwänden des Haltebügels und/oder durch seitliche Führungen am Grundkörper. Die seitlichen Führungen, die jeweils zwei Anlageflächen zugeordnet sind, können unterschiedliche Abstände voneinander aufweisen, so daß sie für hakenförmige Enden mit unterschiedlicher Breite geeignet sind.

Die hakenförmigen Enden der Wischstange können übliche Rastelemente haben, z.B. ein Rastloch, das mit einer Rastnase an der entsprechenden Anlagefläche zusammenwirkt. Um jedoch Wischstangen unabhängig von der Lage oder dem Vorhandensein eines Rastlochs montieren zu können, ist es vorteilhaft, das hakenförmige Ende in Längsrichtung zwischen einem Längsanschlag am Grundkörper und einem axialen Anschlag am Haltebügel zu fixieren. Dabei ist der Abstand zwischen diesen Anschlägen auf das zugeordnete, hakenförmige Ende der Wischstange abgestimmt, so daß der äußere Biegebereich des hakenförmigen Endes am axialen Anschlag des Haltebügels anliegt, wenn das Wischerblatt montiert ist. Der Längsanschlag am Grundkörper kann durch bogenförmige Endstücke der Arme des Grundkörpers, die am inneren Biegebereich des hakenförmigen Endes der Wischstange anliegen, oder durch Anschläge am Ende einer Anlagefläche gebildet werden, an dem die Stirnseite des kurzen Schenkels des hakenförmigen Endes anliegt.

In einfacher Weise wird der axiale Anschlag des Haltebügels von einem Quersteg an der kurzen Seite der Seitenwände gebildet. Eine Rastzunge sorgt dafür, daß das hakenförmige Ende in der montierten Position einrastet. Da der Grundkörper zum Haltebügel drehbar ist, genügt in der Regel ein axialer Anschlag. Zur Verstärkung des Haltebügels ist jedoch ein zweiter axialer Anschlag in Form eines Querstegs am gegenüberliegenden Ende vorteilhaft. Wird in diesem Fall die Drehachse des Lagerteils außermittig zu den beiden Querstegen bzw. axialen Anschlägen des Haltebügels gelegt, so können durch den Mittenversatz weitere Varianten der hakenförmigen Enden von Wischstangen, z.B. bezüglich der Materialstärke, berücksichtigt werden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Draufsicht auf einen Scheibenwischer,
- Fig. 2: einen Längsschnitt durch ein erfindungsgemäßes Lagerteil entsprechend der Linie II-II in Fig. 3,
- Fig. 3: eine Ansicht von oben auf das Lagerteil nach Fig. 2,
- Fig. 4: einen Längsschnitt entsprechend Fig. 2 mit einem halbmontierten Lagerteil an einer Wischstange mit einer kleineren Breite, einer kleineren Materialstärke und einem kleineren Biegeradius,
- Fig. 5: einen Längsschnitt entsprechend Fig. 4 mit einem Lagerteil in montierter Lage,
- Fig. 6: einen Schnitt entsprechend Fig. 5, jedoch mit einer Wischstange mit einer größeren Breite, einer größeren Materialstärke und einem größeren Biegeradius ihres hakenförmigen Endes und
- Fig. 7: einen Schnitt entsprechend Fig. 5 mit einem um 180° gedrehten Grundkörper einer breiteren Wischstange mit einem hakenförmigen Ende mit einem kleineren Biegeradius.

### Beschreibung der Ausführungsbeispiele

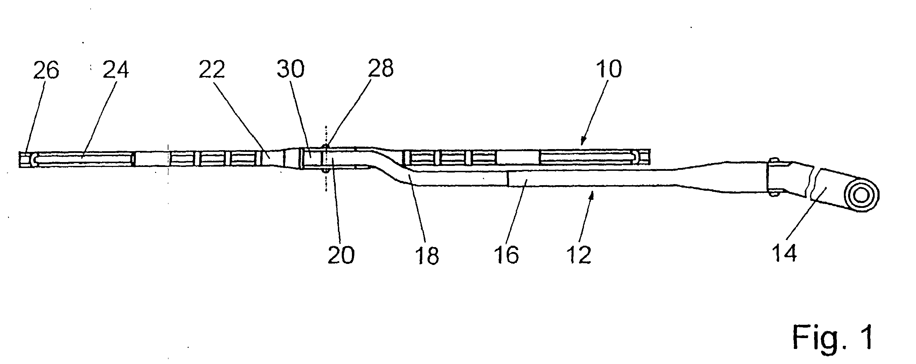

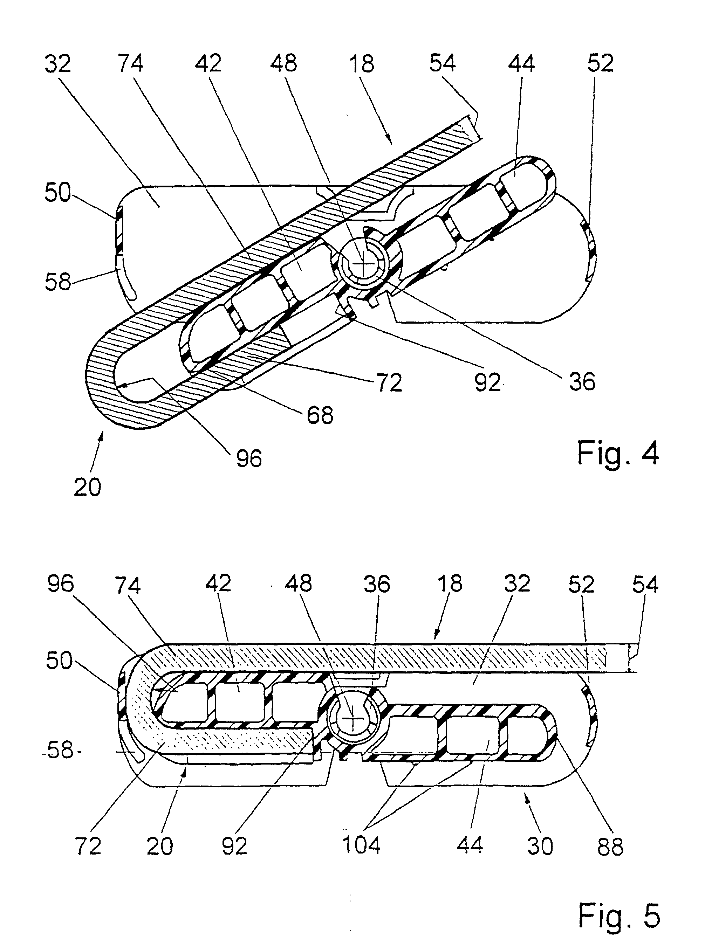

Der in Fig. 1 dargestellte Scheibenwischer besitzt einen Wischerarm 12 mit einem Befestigungsteil 14 und einem Gelenkteil 16, an dem eine Wischstange 18 befestigt ist. Das Gelenkteil 16 und die Wischstange 18 können auch einstückig ausgebildet sein. Die Wischstange 18 hält mit ihrem hakenförmigen Ende 20 (Fig. 5) ein Lagerteil 30, das zwischen Seitenwangen eines Mittelbügels 22 angeordnet ist und einen Lagerbolzen 28 des Mittelbügels 22 mit einer offenen Nabe 36 umfaßt. Der Mittelbügel 22 ist Teil eines Wischerblatts 10, dessen Wischleiste 26 über Krallenbügel 24 gelenkig mit dem Mittelbügel 22 verbunden ist.

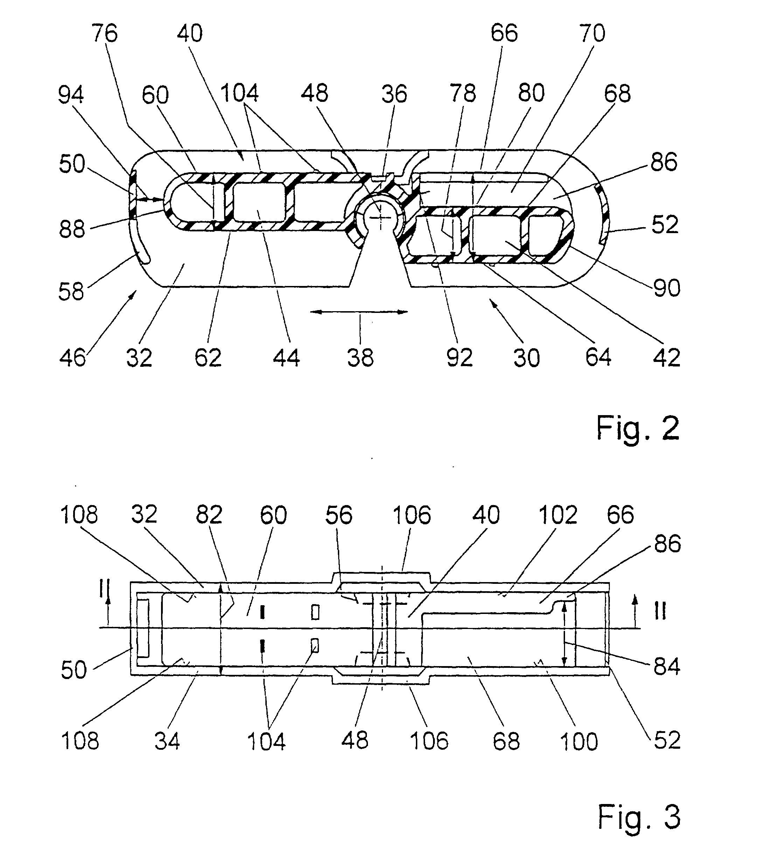

Das Lagerteil 30 hat einen länglichen Grundkörper 40 mit zwei diametral zur Nabe 36 liegenden Armen 42, 44 (Fig. 2). Die Nabe 36 ist über einen Teilbereich ihres Umfangs offen, so daß sie auf den Lagerbolzen 28 aufgeklipst werden kann. Der Grundkörper 40 ist über eine Welle-Nabenverbindung 56 koaxial zur Nabe 36 drehbar in einem Haltebügel 46 gelagert. Die Drehachse ist mit 48 bezeichnet. Der Haltebügel 46, der zwischen den Seitenwangen des Mittelbügels 22 liegt, ist gegen Verdrehen relativ zum Mittelbügel 22 durch seitliche Anschläge 106 gesichert.

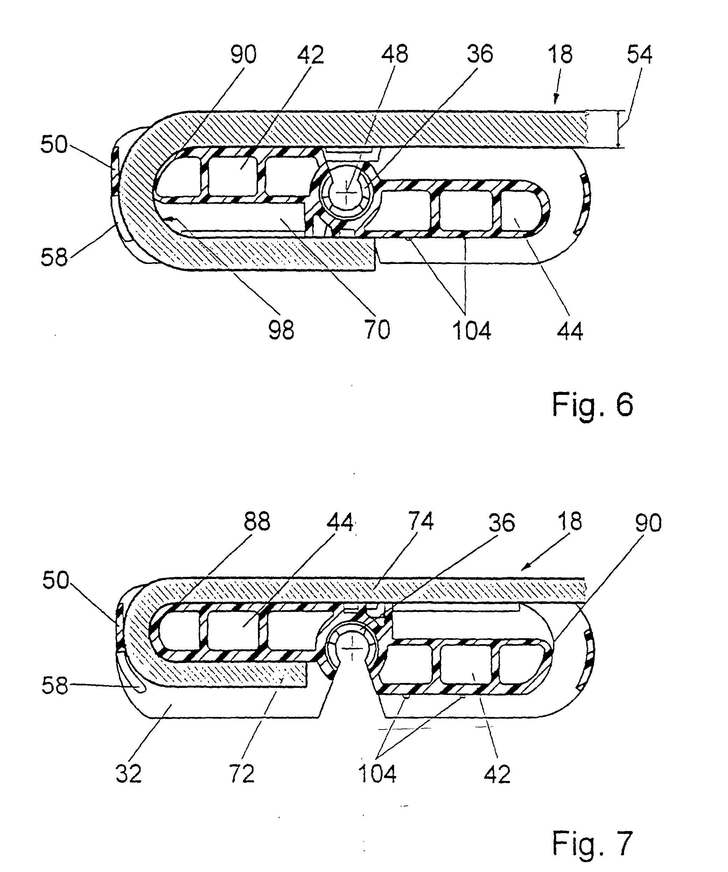

Zur Montage des Lagerteils 30 an die Wischstange 18 wird der Grundkörper 40 zum Haltebügel 46 soweit gedreht, daß das hakenförmige Ende 20 der Wischstange über einen der Arme 42, 44 des Grundkörpers 40 geschoben werden kann. Dabei liegt das hakenförmige Ende 20 mit den Innenseiten seiner Schenkel 72, 74 an zwei der parallelen Anlageflächen 60, 62, 64, 66, 68 an, die in Längsrichtung 38 verlaufen. Der Abstand 76, 78, 80 der zusammenwirkenden Anlageflächen ist auf einen Biegeradius 96, 98 und/oder eine Materialstärke 54 des hakenförmigen Endes 20 abgestimmt. Somit ist das Lagerteil 30 für hakenförmige Enden 20 mit unterschiedlichen Biegeradien 96, 98 geeignet (Fig. 6, Fig.7). Damit eine spielfreie Anlage gewährleistet ist, werden zweckmäßigerweise Fertigungstoleranzen durch kleine Vorsprünge 104 ausgeglichen, die bei der Montage teilweise abgeschert und/oder zusammengepreßt werden.

Die Anlageflächen 60, 62, 64, und 66 liegen an der Umfangskontur des Grundkörpers 40, während die Anlagefläche 68 durch eine Aussparung 70 im Grundkörper 40 gebildet wird und zwischen der Anlagefläche 64 und 66 liegt. Die Anlagefläche 66 kann dabei die Aussparung 70 in der ganzen Breite überdecken oder nur teilweise, wie es in Fig. 3 dargestellt ist.

Das hakenförmige Ende 20 der Wischstange 18 wird durch seitliche Führungen 86, 108 geführt, wobei die seitlichen Führungen 108 durch die Seitenwände 32, 34 des Haltebügels 46 gebildet werden, die entsprechend über der Umfangskontur des Grundkörpers 40 vorstehen. Die seitliche Führung 86 wird von einem Seitenteil des Grundkörpers 40 gebildet. Die seitlichen Führungen 108 und 86 haben zu einer gegenüberliegenden seitlichen Führung einen Abstand 82, 84, der auf die Breite eines zugehörigen hakenförmigen Endes 20 abgestimmt ist. Der Abstand 82, der durch die seitlichen Führungen 108 der Seitenwände 32 und 34 gebildet wird, entspricht der größten Breite eines hakenförmigen Endes 20, für die das Lagerteil 30 geeignet ist. Der Abstand 84 zwischen der seitlichen Führung 86 des Grundkörpers 40 und der gegenüberliegenden seitlichen Führung 108 an der Seitenwand 34 des Haltebügels 46 entspricht einer geringeren Breite eines hakenförmigen Endes 20. Grundsätzlich kann der Abstand 84 auch durch zwei entsprechende seitliche Führungen 86 am Grundkörper 40 gebildet werden. Die seitliche Führung 86 kann gleichzeitig die Anlagefläche 66 abstützen.

Die Arme 42 und 44 des Grundkörpers 40 weisen Längsanschläge 88, 90, 92 für das hakenförmige Ende 20 der Wischstange 18 auf. Die Längsanschläge 88, 90 werden von bogenförmigen Endteilen der Arme 42, 44 gebildet, die die Anlageflächen 60 und 62 bzw. 64 und 66 miteinander verbinden. An den Längsenschlägen 88, 90 liegt die Innenseite eines entsprechenden hakenförmigen Endes 20 im Bereich seines Biegeradius 96, 98 an (Fig. 6 und Fig. 7). Das hakenförmige Ende 20 einer schmaleren Wischstange 18 mit einem kleineren Biegeradius 96 liegt mit der Stirnseite seines kurzen Schenkels 72 an dem Längsanschlag 92 an, der vom Ende der Aussparung 70 gebildet wird. Dadurch wird erreicht, daß der Scheitelpunkt des hakenförmigen Endes 20 nach Fig. 5 mit einem kleineren Biegeradius 96 und einer geringeren Materialstärke 54 einen gleichen Abstand von der Drehachse 48 aufweist wie der Scheitelpunkt des hakenförmigen Endes 20 nach Fig. 6 mit einem größeren Biegeradius 98 und einer größeren Materialstärke 54.

Die Längsanschläge 88, 90, 92 wirken mit axialen Anschlägen 50 und 52 am Haltebügel 46 zusammen. Die axialen Anschläge 50 und 52 werden von Querstegen gebildet, die die Seitenwände 32 und 34 verbinden. Grundsätzlich ist nur ein Quersteg 50 erforderlich, jedoch ist es aus Stabilitätsgründen vorteilhaft, einen zweiten Quersteg 52 vorzusehen. Zwischen den axialen Anschlägen 50, 52 und den Langsanschlägen 88, 90, 92 am Grundkörper 40 ergeben sich in montierter Lage unterschiedliche Abstände 94, so daß Wischstangen 18, deren hakenförmige Enden 20 sich sowohl in der Materialstärke 54 als auch im Biegeradius 96, 98 unterscheiden können, in Längsrichtung 38 fixiert werden. Da die Längsfixierung unabhängig von Rastlöchern an den hakenförmigen Enden 20 der Wischstangen 18 und entsprechenden Rastnasen ist, kann das Lagerteil 30 für alle hakenförmigen Enden 20 mit und ohne Rastlöcher verwendet werden. Das hakenförmige Ende 20 wird mittels einer Rastzunge 58, die federnd am äußeren Bogen des hakenförmigen Endes 20 in der montierten Lage anliegt, in dieser Position gehalten (Fig. 5-7). Zur Montage und Demontage des Lagerteils 30 bzw. des Wischerblatts 10 kann die elastische Rastzunge 58 beim Drehen des hakenförmigen Endes 20 um die Drehachse 48 überdrückt und ausgelenkt werden.

Die Längsanschläge 88, 90, 92 können in Kombination mit dem axialen Anschlag 50 des Haltebügels zur Längssicherung von drei Varianten eines hakenförmigen Endes 20 verwendet werden. Liegt die Drehachse 48 zwischen den axialen Anschlägen 50 und 52 außermittig, so lassen sich mit den Anschlägen 88, 90, 92 in Kombination mit dem zweiten axialen Anschlag 52 eine Längssicherung für drei weitere Varianten eines hakenförmigen Endes mit einem Lagerteil 30 abdecken.

Das erfindungsgemäße Lagerteil 30 kann für Wischstangen 18 mit mindestens zwei unterschiedlichen Breiten, Materialstärken und Biegeradien verwendet werden. Dadurch kann der Bedarf für die drei am meisten vorkommenden Wischstangen, nämlich mit einem Querschnittsprofil von 8 x 3 mm, 9 x 3 mm und 9 x 4 mm, mit einem Lagerteil abgedeckt werden. Es ersetzt, bzw. reduziert, die verwirrende Vielfalt der Lagerteile, die dem Wischerblatt 10 normalerweise beigepackt sind. Es kann ferner bereits in kundenfreundlicher Weise vormontiert werden und reduziert außerdem die Verpackungsgröße.

### Bezugszeichen

- 10: Wischerblatt
- 12: Wischerarm
- 14: Befestigungsteil
- 16: Gelenkteil
- 18: Wischstange
- 20: hakenförmiges Ende
- 22: Mittelbügel
- 24: Krallenbügel
- 26: Wischleiste
- 28: Lagerbolzen
- 30: Lagerteil
- 32: Seitenwand
- 34: Seitenwand
- 36: Nabe
- 38: Längsrichtung
- 40: Grundkörper
- 42: Arm
- 44: Arm
- 46: Haltebügel
- 48: Drehachse
- 50: erster Quersteg
- 52: zweiter Quersteg
- 54: Materialstärke
- 56: Welle-Nabenverbindung
- 58: Rastzunge
- 60: Anlagefläche
- 62: Anlagefläche
- 64: Anlagefläche
- 66: Anlagefläche
- 68: Anlagefläche
- 70: Aussparung
- 72: Schenkel (kurz)
- 74: Schenkel (lang)
- 76: Abstand
- 78: Abstand
- 80: Abstand
- 82: Abstand
- 84: Abstand
- 86: seitliche Führung
- 88: Längsanschlag
- 90: Längsanschlag
- 92: Längsanschlag
- 94: Abstand
- 96: kleinerer Biegeradius
- 98: größerer Biegeradius
- 100: Führungsfläche
- 102: Führungsfläche
- 104: Vorsprung
- 106: Anschlag
- 108: seitliche Führung

## Patentansprüche

1. Lagerteil(30) zum Anlenken eines Wischerblatts (10) an ein hakenförmiges Ende (20) einer Wischstange (18) eines Scheibenwischers, das mit einer über einen Teil ihres Umfangs offenen Nabe (36) auf einen Lagerbolzen (28) des Wischerblatts (10) aufsteckbar ist und mit einem Ende in das hakenförmige Ende (20) eingeführt und im montierten Zustand von diesem über Anlageflächen (60, 62, 64, 66, 68) und Rastmittel (50, 52, 88, 90, 92) gehalten wird, **dadurch gekennzeichnet, daß** ein länglicher Grundkörper (40) mit zwei diametral zur Nabe (36) liegenden Armen (42, 44) in einem Haltebügel (46), dessen Seitenwände (48, 50) in Längsrichtung (38) über die Seitenflächen des Grundkörpers (40) vorstehen und über mindestens einen Quersteg (52, 54) miteinander verbunden sind, koaxial zur Nabe (36) drehbar gehalten ist, wobei die Arme (42, 44) zur Aufnahme von Wischstangen (18) mit unterschiedlichen hakenförmigen Enden (20) verschieden gestaltet sind.

2. Lagerteil (30) nach Anspruch 1, **dadurch gekennzeichnet, daß** die Arme (42, 44) des Grundkörpers (40) jeweils mindestens zwei in Längsrichtung (38) verlaufende parallele Anlageflächen (60, 62, 64, 66, 68) haben, an denen die Schenkel (72, 74) des hakenförmigen Endes (20) anliegen und deren Abstände (76, 78, 80) zueinander unterschiedlich groß sind.

3. Lagerteil (30) nach einem der vorhergehenden Ansprüche, **dadurch gekennzeichnet, daß** mindestens eine Anlagefläche (68) durch eine Aussparung (70) in einem Arm (42) des Grundkörpers (40) gebildet ist.

4. Lagerteil (30) nach einem der vorhergehenden Ansprüche, **dadurch gekennzeichnet, daß** den Anlageflächen (60, 62, 64, 66, 68) jeweils zwei seitliche Führungen (86, 108) an dem Haltebügel (46) und/oder Grundkörper (40) zugeordnet sind, deren Abstand (82, 84) voneinander auf hakenförmige Enden (20) mit verschiedenen Breiten abgestimmt ist.

5. Lagerteil (30) nach einem der vorhergehenden Ansprüche, **dadurch gekennzeichnet, daß** der Grundkörper (40) für jeweils zwei zusammenwirkende Anlageflächen (60 und 62, 64 und 66, 64 und 68) einen Längsanschlag (88, 90, 92) hat, dessen Abstand (94) in montierter Lage zu einem axialen Anschlag (50) des Haltebügels (46) abhängig vom Biegeradius (96, 98) und/oder von der Materialstärke (54) des zugehörigen hakenförmigen Endes (20) so bestimmt ist, daß dieses zwischen dem Längsanschlag (88, 90, 92) des Grundkörpers (40) und dem axialen Anschlag (50, 52) des Haltebügels (46) in Längsrichtung (38) gehalten ist.

6. Lagerteil (30) nach Anspruch 5, **dadurch gekennzeichnet, daß** der axiale Anschlag (50, 52) des Haltebügels (46) von einem Quersteg (50, 52) an einer kurzen Seite der Seitenwände (32, 34) gebildet ist und eine Rastzunge (58) aufweist.

7. Lagerteil (30) nach einem der vorhergehenden Ansprüche, **dadurch gekennzeichnet, daß** die Seitenwände (32, 34) des Kaltebügels (46) seitliche führuncsflächen (100, 102) für die äußeren Anlageflächen (60, 62, 64, 66) des Grundkörpers (40) bilden.

8. Lagerteil (30) nach einem der vorhergehenden Ansprüche, **dadurch gekennzeichnet, daß** mindestens eine Anlagefläche (60, 62, 64, 66, 68) kleine Vorsprünge (104) zum Ausgleich von Fertigungstoleranzen aufweist.

9. Lagerteil (30) nach einem der vorhergehenden Ansprüche, **dadurch gekennzeichnet, daß** der Haltebügel (46) außen an den Seitenwänden (32, 34) einen seitlichen Anschlag (106) aufweist, der eine Drehbewegung relativ zum Wischerblatt (10) verhindert.

10. Lagerteil (30) nach einem der vorhergehenden Ansprüche, **dadurch gekennzeichnet, daß** der Haltebügel (46) an seinen kurzen Seiten jeweils einen axialen Anschlag (50, 52) hat und die Drehachse (48) der Nabe (36) zu den Anschlägen (50, 52) außermittig liegt.

## Claims

1. Bearing part (30) for coupling a wiper blade (10) to a hook-shaped end (20) of a wiper rod (18) of a wiper, which bearing part can be placed with a hub (36) open over part of its circumference onto a bearing bolt (28) of the wiper blade (10) and is introduced by one end into the hook-shaped end (20) and, in the fitted state, is held by the latter via bearing surfaces (60, 62, 64, 66, 68) and latching means (50, 52, 88, 90, 92), **characterized in that** an elongate main body (40) having two arms (42, 44), which lie diametrically with respect to the hub (36), is held rotatably coaxially with the hub (36) in a retaining bracket (46), the side walls (48, 50) of which protrude in the longitudinal direction (38) over the side surfaces of the main body (40) and are connected to each other via at least one transverse web (52, 54), the arms (42, 44) differing in design with different hook-shaped ends (20) in order to receive wiper rods (18).

2. Bearing part (30) according to Claim 1, **characterized in that** the arms (42, 44) of the main body (40) each have at least two parallel bearing surfaces (60, 62, 64, 66, 68) which run in the longitudinal direction (38) and against which the limbs (72, 74) of the hook-shaped end (20) bear and the distances (76, 78, 80) of which from one another differ in size.

3. Bearing part (30) according to one of the preceding claims, **characterized in that** at least one bearing surface (68) is formed by a cutout (70) in an arm (42) of the main body (40).

4. Bearing part (30) according to one of the preceding claims, **characterized in that** the bearing surfaces (60, 62, 64, 66, 68) are each assigned two lateral guides (86, 108) on the retaining bracket (46) and/or the main body (40), the distance (82, 84) of which guides from one another is matched to hook-shaped ends (20) having different widths.

5. Bearing part (30) according to one of the preceding claims, **characterized in that** the main body (40) has one longitudinal stop (88, 90, 92) for two interacting bearing surfaces (60 and 62, 64 and 66, 64 and 68) in each case, the distance (94) of which longitudinal stop to an axial stop (50) of the retaining bracket (46), in the fitted position, is determined as a function of the bending radius (96, 98) and/or of the material thickness (54) of the associated, hook-shaped end (20) in such a manner that the said end is held in the longitudinal direction (38) between the longitudinal stop (88, 90, 92) of the main body (40) and the axial stop (50, 52) of the retaining bracket (46).

6. Bearing part (30) according to Claim 5, **characterized in that** the axial stop (50, 52) of the retaining bracket (46) is formed by a transverse web (50, 52) on a short side of the side walls (32, 34) and has a latching tongue (58).

7. Bearing part (30) according to one of the preceding claims, **characterized in that** the side walls (32, 34) of the retaining bracket (46) form lateral guide surfaces (100, 102) for the outer bearing surfaces (60, 62, 64, 66) of the main body (40).

8. Bearing part (30) according to one of the preceding claims, **characterized in that** at least one bearing surface (60, 62, 64, 66, 68) has small projections (104) in order to compensate for manufacturing tolerances.

9. Bearing part (30) according to one of the preceding claims, **characterized in that** the retaining bracket (46) has, on the outside, on the side walls (32, 34), a lateral stop (106) which prevents a rotational movement relative to the wiper blade (10).

10. Bearing part (30) according to one of the preceding claims, **characterized in that** the retaining bracket (46) has a respective axial stop (50, 52) on its short sides and the rotational axis (48) of the hub (36) lies eccentrically with respect to the stops (50, 52).

## Revendications

1. Support de palier (30) pour articuler un balai d'essuie-glace (10) à l'extrémité 20) en forme de crochet d'un bras d'essuie-glace (18) qui s'engage avec un moyeu (36) ouvert sur une partie de sa périphérie sur l'axe de palier (28) du balai d'essuie-glace (10) et s'introduit avec une extrémité dans l'extrémité en forme de crochet (20) en étant tenu à l'état monté par celui-ci grâce à des surfaces d'appui (60, 62, 64, 66, 68) et des moyens d'accrochage (50, 52, 88, 90, 92),
**caractérisé en ce que**
un corps de base (40), allongé est maintenu à rotation coaxialement au moyeu (36) par deux bras (42, 44) dans des positions diamétrales par rapport au moyeu (36), dans un étrier de fixation (46) dont les parois latérales (48, 50) dépassent dans la direction longitudinale (38) pardessus les surfaces latérales du corps de base (40) et ces parois latérales sont reliées par au moins une traverse (52, 54),
les bras (42, 44) ont des formes différentes pour recevoir des bras d'essuie-glace (18) ayant des extrémités (20) en forme de crochet, différentes.

2. Support de palier (30) selon la revendication 1,
**caractérisé en ce que**
les bras (42, 44) du corps de base (40) ont deux surfaces d'appui (60, 62, 64, 66, 68), parallèles dans la direction longitudinale (38) et contre lesquelles s'appuient les branches (72, 74) de l'extrémité (20) en forme de crochet et dont les intervalles (76, 78, 80) sont de dimensions différentes.

3. Support de palier (30) selon l'une des revendications précédentes,
**caractérisé par**
au moins une surface d'appui (68) formée par une découpe (70) dans un bras (42) du corps de base (40).

4. Support de palier (30) selon l'une des revendications précédentes,
**caractérisé en ce que**
chaque fois deux guides latéraux (86, 108) sont associés aux surfaces d'appui (60, 62, 64, 66, 68) sur l'étrier de fixation (46) et/ou le corps de base (40) et l'écartement (82, 84) des guides l'un par rapport à l'autre est fixé en fonction des extrémités en forme de crochet (20) avec des largeurs différentes.

5. Support de palier (30) selon l'une quelconque des revendications précédentes,
**caractérisé en ce que**
le corps de base (40) comporte une butée longitudinale (88, 90, 92) pour chaque fois deux surfaces d'appui (60 et 62 ; 64 et 66 ; 64 et 68) qui coopèrent, la distance de cette butée longitudinale (94) à l'état monté, par rapport à une butée axiale (50) de l'étrier de fixation (46) étant définie en fonction du rayon de courbure (96, 98) et/ou l'épaisseur de la matière (54) de l'extrémité en forme de crochet (20), correspondante pour que celle-ci soit tenue entre la butée longitudinale (88, 90, 92) du corps de base (40) et la butée axiale (50, 52) de l'étrier de fixation (46) dans la direction longitudinale (38).

6. Support de palier (30) selon la revendication 5,
**caractérisé en ce que**
la butée (50, 52) de l'étrier de fixation (46) est formée par une traverse (50, 52) sur un côté court des parois latérales (32, 34) et comporte une languette d'accrochage (58).

7. Support de palier (30) selon l'une quelconque des revendications précédentes,
**caractérisé en ce que**
les parois latérales (32, 34) de l'étrier de fixation (46) ont des surfaces de guidage (100, 102) latérales pour les surfaces d'appui et l'extérieur (60, 62, 64, 66) du corps de base (40).

8. Support de palier (30) selon l'une des revendications précédentes,
**caractérisé en ce que**
au moins une surface d'appui (60, 62, 64, 66, 68) comporte de petites saillies (104) pour compenser les tolérances de fabrication.

9. Support de palier (30) selon l'une quelconque des revendications précédentes,
**caractérisé en ce que**
l'étrier de fixation (46) comporte extérieurement sur les parois latérales (32, 34), une butée latérale (106) évitant un mouvement de rotation par rapport au balai d'essuie-glace (10).

10. Support de palier (30) selon l'une quelconque des revendications précédentes,
**caractérisé en ce que**
l'étrier de fixation (46) comporte sur ses côtés courts, chaque fois une butée axiale (50, 52) et l'axe de rotation (48) du moyeu (36) est décentrée par rapport aux butées (50, 52).
